# EUROPÄISCHE PATENTSCHRIFT

(11) **EP 1 818 566 B1**
(45) Veröffentlichungstag und Bekanntmachung des Hinweises auf die Patenterteilung: **17.08.2011**
(21) Anmeldenummer: 07001661.3
(22) Anmeldetag: 25.01.2007
(51) Int. Cl.: F16F 15/16

(54) **Drehschwingungsdämpfungseinrichtung**
Rotational vibration attenuation device
Dispositif d'amortissement d'oscillations de rotation

(30) Priorität: 11.02.2006 DE 102006006355
(43) Veröffentlichungstag der Anmeldung: 15.08.2007
(73) Patentinhaber: Schaeffler Technologies GmbH & Co. KG, 91074 Herzogenaurach (DE)
(72) Erfinder: Ineichen, Laurent, 67100 Strasbourg (DE); Kremer, Eugen, 77815 Bühl (DE); Stehr, Reinhard, 77815 Bühl (DE)

(56) Entgegenhaltungen:
- EP-A2- 0 303 239
- US-A- 4 091 901

## Beschreibung

Die Erfindung betrifft eine Drehschwingungsdämpfungseinrichtung mit einer Fördereinrichtung, insbesondere einer Verdrängerpumpe, für ein Fluid, mit einem Fluidspeicher.

Aus der deutschen Patentschrift DE 37 26 926 C1(EP-A-0 303 239) und der deutschen Offenlegungsschrift DE 39 43 520 A1 ist ein Drehschwingungsdämpfer mit einer in einer Förderleitung vorgesehenen Speicherkammer bekannt, die ein elastisch veränderbares Volumen aufweist. In der Druckseite der Förderleitung ist ein drehzahlabhängiges Kolbensystem vorgesehen, dessen Kolben geeignet ist, als Drosselstellglied durch seine Axialbewegung den Querschnitt der Förderleitung zu verändern. In der Förderleitung kann hinter der Speicherkammer anstelle des drehzahlabhängig gesteuerten Kolbenventils oder parallel hierzu ein dem vollen Dämpfungsmitteldruck ausgesetztes, auf dynamische Druckänderungen ansprechendes Steuerventil angeordnet sein.

Aufgabe der Erfindung ist es, eine Drehschwingungsdämpfungseinrichtung gemäß dem Oberbegriff des Anspruchs 1 zu schaffen, die einen besseren Wirkungsgrad als herkömmliche Drehschwingungsdämpfungseinrichtungen aufweist.

Die Aufgabe ist bei einer Drehschwingungsdämpfungseinrichtung mit einer Fördereinrichtung, insbesondere einer Verdrängerpumpe, für ein Fluid, mit einem Fluidspeicher, dadurch gelöst, dass die Fördereinrichtung mit zwei Fluidspeichern in Verbindung steht, zwischen welche die Fördereinrichtung, insbesondere eine Verdrängerpumpe, in Reihe geschaltet ist. Drehschwingungsdämpfungseinrichtungen mit einem geschlossenen Kreislauf, wie sie aus den vorab genannten Druckschriften bekannt sind, haben den Nachteil, dass im Betrieb bei konstantem Drehmoment Schlupf auftritt. Durch die vorliegende Erfindung wird eine nahezu verlustfreie Drehschwingungsdämpfungseinrichtung geschaffen, die eine sehr geringe Eigenfrequenz aufweist und gleichzeitig große Verdrehwinkel zulässt. Bei der Fördereinrichtung handelt es sich vorzugsweise um eine Verdrängerpumpe, die ein Fluid, zum Beispiel Hydrauliköl, zwischen den als Druckspeicher ausgelegten Fluidspeichern hin und her verdrängt.

Ein bevorzugtes Ausführungsbeispiel der Drehschwingungsdämpfungseinrichtung ist dadurch gekennzeichnet, dass die beiden Fluidspeicher jeweils mit einem weiteren Fluidspeicher in Reihe geschaltet sind. Durch die weiteren Fluidspeicher kann die Resonanzspitze der Dämpferkennlinie der erfindungsgemäßen Drehschwingungsdämpfungseinrichtung beschränkt werden. Dabei wird gleichzeitig eine theoretisch verlustfreie Übertragung eines konstanten Drehmoments ermöglicht. In dem erfindungsgemäßen System wird die Druckdifferenz zwischen den hydraulischen Speichern durch Pumpwirkung automatisch so angepasst, dass die Mittelwerte des Antriebsmoments und des Abtriebsmoments gleich sind.

Ein weiteres bevorzugtes Ausführungsbeispiel der Drehschwingungsdämpfungseinrichtung ist dadurch gekennzeichnet, dass zwischen den Fluidspeichern und den weiteren Fluidspeichern insbesondere jeweils eine Volumenstrombegrenzungseinrichtung, insbesondere eine Drosselstelle und/oder eine Drosselventileinrichtung, vorgesehen sind/ist. Die dämpfende Wirkung der Drosselstellen oder Ventileinrichtungen wird gemäß einem wesentlichen Aspekt der Erfindung nur auf die schwingende Komponente des zu übertragenden Drehmoments gerichtet.

Ein weiteres bevorzugtes Ausführungsbeispiel der Drehschwingungsdämpfungseinrichtung ist dadurch gekennzeichnet, dass die Volumenstrombegrenzungseinrichtungen drehzahlabhängig arbeiten. Vorzugsweise werden die Volumenstrombegrenzungseinrichtungen durch die im Betrieb wirkenden Fliehkräfte automatisch betätigt.

Ein weiteres bevorzugtes Ausführungsbeispiel der Drehschwingungsdämpfungseinrichtung ist dadurch gekennzeichnet, dass die Volumenstrombegrenzungseinrichtungen so eingestellt sind, dass sie bei einer Frequenz öffnen, die zwischen den Resonanzfrequenzen im geöffneten und im geschlossenen Zustand der zugehörigen Volumenstrombegrenzungseinrichtung liegt. Dadurch kann ein unerwünschter Durchgang durch Resonanzfrequenzen vermieden werden.

Ein weiteres bevorzugtes Ausführungsbeispiel der Drehschwingungsdämpfungseinrichtung ist dadurch gekennzeichnet, dass die Fördereinrichtung ein Gehäuse, das mit der Antriebs- oder Abtriebsseite eines Antriebsstrangs gekoppelt ist, und ein Eingangsteil aufweist, das mit der Abtriebs- oder Antriebsseite des Antriebsstrangs gekoppelt ist. Die Pulsationen des Antriebsmoments im Betrieb führen zu Verdrehungen des Gehäuses bezüglich einer Eingangswelle der Fördereinrichtung. Weit über Resonanz werden Pulsationen des Antriebsmoments durch die Trägheit des Gehäuses kompensiert und fast nicht in Pulsationen des Abtriebsmoments gewandelt. Der Vorteil dieser Lösung gegenüber einem konventionellen Torsionsdämpfer besteht darin, dass der Verdrehwinkel nicht zu eng begrenzt ist und ohne weiteres einige Umdrehungen erreicht werden können.

Ein weiteres bevorzugtes Ausführungsbeispiel der Drehschwingungsdämpfungseinrichtung ist dadurch gekennzeichnet, dass die Fördereinrichtung eine zweistufige Zahnradpumpe mit mindestens zwei Druckräumen umfasst, die jeweils mit mindestens einem Fluidspeicher in Verbindung stehen. Die zweistufige Ausführung der Zahnradpumpe liefert unter anderem den Vorteil, dass die Pumpe keine Unwucht aufweist, wenn die äußeren Zahnräder diametral gegenüberliegend angeordnet sind.

Ein weiteres bevorzugtes Ausführungsbeispiel der Drehschwingungsdämpfungseinrichtung ist dadurch gekennzeichnet, dass die Zahnradpumpe zwei weitere Druckräume umfasst, die jeweils mit mindestens einem weiteren Fluidspeicher in Verbindung stehen. Dadurch kann auf konstruktiv einfache Art und Weise das Auftreten von unerwünschten Unwuchten verhindert werden.

Ein weiteres bevorzugtes Ausführungsbeispiel der Drehschwingungsdämpfungseinrichtung ist dadurch gekennzeichnet, dass die Fluidspeicher gleichmäßig über einen Umfang der Zahnradpumpe verteilt angeordnet sind. Dadurch wird das Auftreten von Unwuchten verhindert.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

Es zeigen:
- Figur 1: eine schematische Darstellung einer erfindungsgemäßen Drehschwingungsdämpfungseinrichtung mit zwei Fluidspeichern;
- Figur 2: eine ähnliche Darstellung wie in Figur 1 mit drei Fluidspeichern;
- Figur 3: eine ähnliche Darstellung wie in den Figuren 1 und 2 mit vier Fluidspeichern;
- Figur 4: ein kartesisches Koordinatendiagramm, in dem die Übertragungsfunktion des Drehmoments in Form einer Kennlinie über der Frequenz aufgetragen ist;
- Figur 5: ein Ausführungsbeispiel einer erfindungsgemäßen Drehschwingungsdämpfungseinrichtung im Längsschnitt;
- Figur 6: die Ansicht eines Schnitts entlang der Linie VI-VI in Figur 5;
- Figur 7: die Ansicht eines Schnitts entlang der Linie VII-VII in Figur 5;
- Figur 8: die Ansicht eines Schnitts entlang der Linie VIII-VIII in Figur 5;
- Figur 9: eine ähnliche Darstellung wie in Figur 7 gemäß einem weiteren Ausführungsbeispiel;
- Figur 10: eine ähnliche Darstellung wie in Figur 8 gemäß einem weiteren Ausführungsbeispiel und

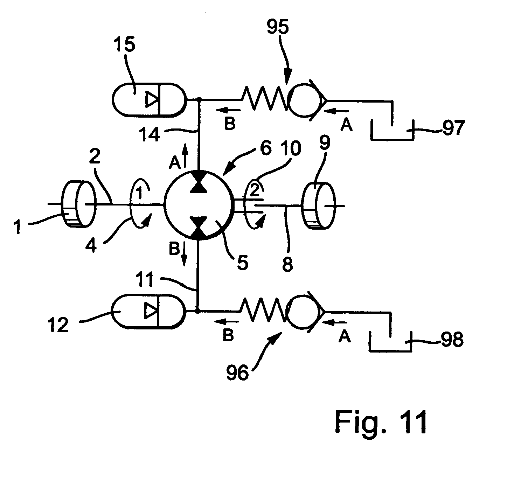

- Figur 11: Befüllungsprinzip.

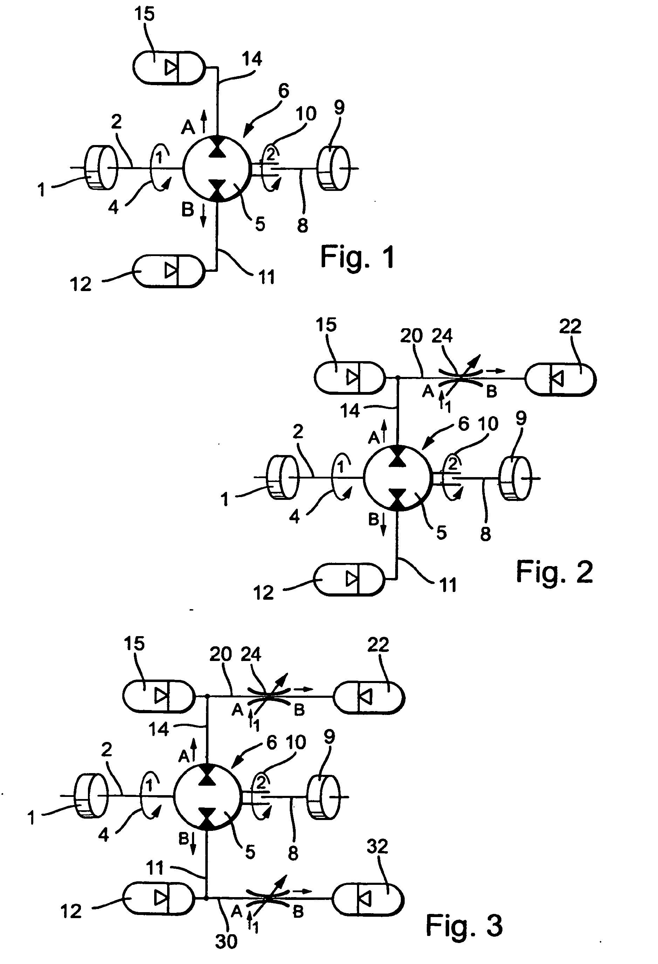

In den Figuren 1 bis 3 ist ein Teil eines Antriebsstrangs eines Kraftfahrzeugs in unterschiedlichen Ausführungsbeispielen schematisch dargestellt. Zur Bezeichnung gleicher Teile werden in den Figuren 1 bis 3 die gleichen Bezugszeichen verwendet. Im nachfolgenden Text wird zunächst auf die Gemeinsamkeiten und dann auf die Unterschiede zwischen den einzelnen Ausführungsbeispielen eingegangen.

Der Antriebsstrang eines Kraftfahrzeugs umfasst eine Antriebsseite 1 mit einer Antriebseinheit, insbesondere einer Brennkraftmaschine, von der eine Antriebswelle 2 ausgeht. Bei Kolbenmotoren ist die Antriebswelle 2 bevorzugt als Kurbelwelle ausgebildet. Durch einen Pfeil 4 ist angedeutet, dass sich die Antriebswelle 2 im Betrieb dreht. Die Antriebswelle 2 ist drehfest mit einem Pumpengehäuse 5 einer Fördereinrichtung 6 verbunden. Bei der Fördereinrichtung 6 handelt es sich um eine Verdrängerpumpe, insbesondere eine Zahnradpumpe, mit einer Verdrängereinrichtung, die in einem Verdrängerraum angeordnet ist. Die Verdrängereinrichtung der Fördereinrichtung 6 ist drehfest mit einer Abtriebswelle 8 auf einer Abtriebsseite 9 verbunden. Bei der Abtriebswelle 8 handelt es sich zum Beispiel um die Eingangswelle eines Getriebes, das auf der Abtriebsseite 9 angeordnet ist. Durch einen Pfeil 10 ist angedeutet, dass die Drehung der Antriebswelle 2 auf die Abtriebswelle 8 übertragen wird.

Der Verdrängerraum der Fördereinrichtung 6 steht über eine Hydraulikleitung 11 mit einem Fluidspeicher 12 in Verbindung. Bei dem Fluidspeicher 12 handelt es sich, ebenso wie den im nachfolgenden Text erwähnten Fluidspeichern, um einen hydraulischen Druckspeicher. Der Fluidspeicher 12 kann, ebenso wie auch die nachfolgend genannten Fluidspeicher, direkt mit dem Verdrängerraum der Fördereinrichtung 6 verbunden sein. Der Verdrängerraum der Fördereinrichtung 6 ist über eine weitere Hydraulikleitung 14 mit einem weiteren Fluidspeicher 15 verbunden. Bei dem in Figur 1 dargestellten System sind die beiden Fluidspeicher 12 und 15 über die Fördereinrichtung 6 miteinander verknüpft. Das Pumpengehäuse 5 der Fördereinrichtung 6 ist mit der Antriebswelle 2 gekoppelt. Die Verdrängereinrichtung der Fördereinrichtung 6 ist mit der Abtriebswelle 8 gekoppelt.

In dem dargestellten Hydrauliksystem wird eine Druckdifferenz zwischen den Fluidspeichern 12 und 15, die auch als hydraulische Kapazitäten bezeichnet werden, durch die Wirkung der Fördereinrichtung 6 automatisch so angepasst, dass die Mittelwerte des Antriebsmoments und des Abtriebsmoments gleich sind. Pulsationen des Antriebsmoments führen zu Verdrehungen des Pumpengehäuses 5 bezüglich der Abtriebswelle 8. Weit über Resonanz werden die Pulsationen des Antriebsmoments durch die Trägheit des Pumpengehäuses 5 kompensiert und so gut wie gar nicht in Pulsationen des Antriebsmoments gewandelt. Das dargestellte System liefert den Vorteil, dass der Verdrehwinkel so gut wie gar nicht begrenzt ist und ohne Probleme einige Umdrehungen erreicht werden können. Dadurch wird ermöglicht, die Eigenfrequenz der Drehschwingungsdämpfungseinrichtung deutlich zu reduzieren und die Isolationsgüte stark zu verbessern.

Bei dem in Figur 2 dargestellten Ausführungsbeispiel steht der Fluidspeicher 15 über eine weitere Hydraulikleitung 20 mit einem weiteren Fluidspeicher 22 in Verbindung. Zwischen die Fluidspeicher 15 und 22 ist eine Volumenstrombegrenzungseinrichtung 24 geschaltet. Bei der Volumenstrombegrenzungseinrichtung 24 kann es sich, ebenso wie bei den nachfolgend beschriebenen Volumenstrombegrenzungseinrichtungen, um eine Blende, eine Drossel, ein Volumenstromregelventil oder um weitere hydraulische Verbraucher, wie zum Beispiel ein hydraulisches Getriebe, einen Schieberkasten oder einen Anpresszylinder, handeln. Die Volumenstrombegrenzungseinrichtung 24 hat eine dämpfende Wirkung zwischen den Fluidspeichern 15 und 22. Diese dämpfende Wirkung ist nur auf die schwingende Komponente des zu übertragenden Drehmoments gerichtet.

Bei der Volumenstrombegrenzungseinrichtung 24 handelt es sich, ebenso wie bei den nachfolgenden Volumenstrombegrenzungseinrichtungen, vorzugsweise um ein Drosselventil, das drehzahlabhängig, zum Beispiel durch die Wirkung der Fliehkraft, betätigt wird. Dabei ist es vorteilhaft, wenn die Ventileinrichtung erst bei einer Frequenz öffnet, die zwischen den Resonanzfrequenzen im geschlossenen und geöffneten Zustand liegt.

Bei dem in Figur 3 dargestellten Ausführungsbeispiel steht der Fluidspeicher 12 über eine weitere Hydraulikleitung 30 mit einem weiteren Fluidspeicher 32 in Verbindung. Zwischen die beiden Fluidspeicher 12 und 32 ist eine weitere Volumenstrombegrenzungseinrichtung 34 geschaltet. Bei der Volumenstrombegrenzungseinrichtung 34 handelt es sich vorzugsweise um eine Verstelldrossel.

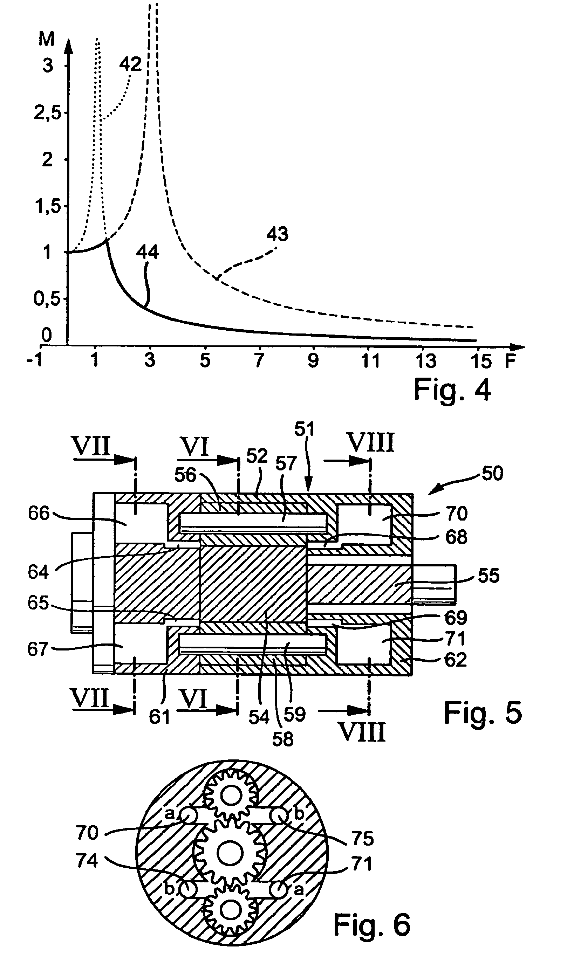

In Figur 4 ist eine Kennlinie des in Figur 3 dargestellten Systems in einem kartesischen Koordinatendiagramm dargestellt, in dem die Übertragungsfunktion des Drehmoments M über der Frequenz F aufgetragen ist. Bei 42 ist die Kennlinie bei einer geöffneten Volumenstrombegrenzungseinrichtung punktiert angedeutet. Bei 43 ist die Kennlinie bei einer geschlossenen Volumenstrombegrenzungseinrichtung gestrichelt angedeutet. Der tatsächliche Kennlinienverlauf ist mit 44 bezeichnet. Mit zunehmender Drehzahl ist das System zunächst steif und dann nach einem Schaltpunkt weich. Dadurch muss es keine der beiden dargestellten Resonanzen durchlaufen und die Übertragungsfunktion bleibt beschränkt, auch wenn im System keine Dämpfung vorliegt.

In den Figuren 5 bis 8 ist ein Ausführungsbeispiel mit einer zweistufigen Zahnradpumpe 50 in verschiedenen Ansichten dargestellt. Die Zahnradpumpe 50 umfasst ein Pumpengehäuse 51 mit einem Gehäusegrundkörper 52, in dem ein Zahnrad 54 drehbar angeordnet ist. Von dem Zahnrad 54 geht eine Pumpenwelle 55 aus, die zum Beispiel mit der Abtriebsseite eines Antriebsstrangs des Kraftfahrzeugs verbunden ist. Radial außerhalb des Zahnrads 54 sind ein Zahnrad 56 auf einer Welle 57 und ein Zahnrad 58 auf einer Welle 59 drehbar angeordnet. Die beiden Zahnräder 56 und 58 befinden sich mit dem Zahnrad 54 in Eingriff, um nach dem bekannten Prinzip einer Zahnradpumpe ein Fluid, insbesondere ein Hydraulikmedium, in Abhängigkeit von der relativen Drehrichtung in unterschiedliche Druckräume zu fördern. Die Enden der Achsen 57 und 59 sind in Gehäuseabschlussplatten 61, 62 gelagert, die das Pumpengehäuse 51 seitlich begrenzen.

Die Zahnradpumpe 50 umfasst zu der Gehäuseabschlussplatte 61 hin zwei Druckräume 64 und 65. Der Druckraum 64 steht mit einem Fluidspeicher 66 in Verbindung. Der Druckraum 65 steht mit einem Fluidspeicher 67 in Verbindung. Zu der Gehäuseabschlussplatte 62 hin weist die Zahnradpumpe 50 zwei weitere Druckräume 68 und 69 auf. Der Druckraum 68 steht mit einem Fluidspeicher 70 in Verbindung. Der Druckraum 69 steht mit einem Fluidspeicher 71 in Verbindung. In Figur 6 sieht man, dass die Fluidspeicher 70 und 71 in der Gehäuseabschlussplatte 62 diametral gegenüberliegend angeordnet sind. Darüber hinaus weist die Gehäuseabschlussplatte 62 zwei weitere Fluidspeicher 74 und 75 auf, die ebenfalls diametral gegenüberliegend angeordnet sind.

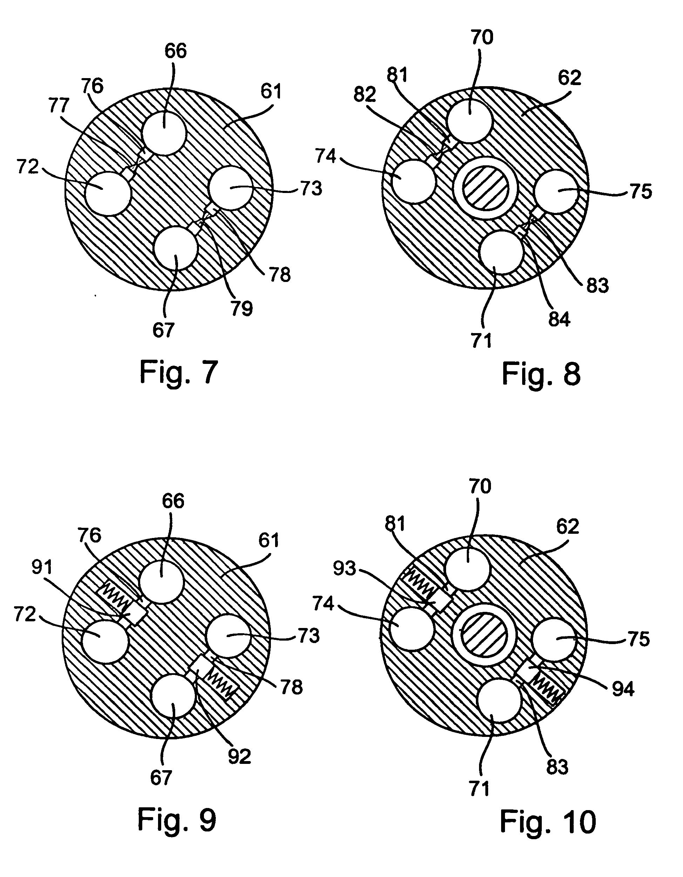

In Figur 7 sieht man, dass in der Gehäuseabschlussplatte 61 zusätzlich zu den Fluidspeichern 66 und 67 zwei weitere Fluidspeicher 72 und 73 angeordnet sind. Die Fluidspeicher 66 und 67 und 72, 73 sind über einen Umfang der Gehäuseabschlussplatte 61 gleichmäßig verteilt angeordnet. Die beiden Fluidspeicher 66 und 72 stehen über einen Verbindungskanal 76 miteinander in Verbindung, der mit einem Drosselventil 77 ausgestattet ist. Die beiden Fluidspeicher 67 und 73 stehen über einen Verbindungskanal 78 miteinander in Verbindung, in dem ein Drosselventil 79 vorgesehen ist.

In Figur 8 sieht man, dass die beiden Fluidspeicher 70 und 74 in der Gehäuseabschlussplatte 62 über einen Verbindungskanal 81 miteinander in Verbindung stehen, in dem ein Drosselventil 82 vorgesehen ist. Die beiden Fluidspeicher 71 und 75 stehen über einen Verbindungskanal 83 miteinander in Verbindung, in dem ein Drosselventil 84 vorgesehen ist. Die in den Figuren 5 bis 8 dargestellte zweistufige Zahnradpumpe mit den speziell angeordneten Druckräumen und Fluidspeichern liefert den Vorteil, dass sie keine Unwucht aufweist.

In den Figuren 9 und 10 ist dargestellt, dass in den Verbindungskanälen 76, 78, 81, 83 auch jeweils eine fliehkraftgesteuerte Ventileinrichtung 91 bis 94 angeordnet sein kann. Vorzugsweise sind die Ventileinrichtungen 91 bis 94 so ausgelegt, dass ein Gleichgewicht zwischen der im Betrieb auftretenden Fliehkraft und der Federkraft besteht. Dadurch kann eine frequenzabhängige Dämpfung erzeugt werden. In Figur 9 ist das Prinzip einer möglichen Befüllung des Systems dargestellt. Die Speicher 12 und 15 sind über die Rückschlagventile 95, 96 mit den Fluidquellen mit niedrigem Druck 97 und 98 verbindbar. Bei Unterdruck in einem der Fluidspeicher 12 oder 15 werden sie mit Fluid aus den Fluidquellen versorgt. Die Rückschlagventile können ansteuerbar sein, zum Beispiel vom Fahrer. Die Ansteuerung der Rückschlagventile kann derart erfolgen, dass diese als Anfahrelemente dienen können.

### Bezugszeichenliste

- 1.: Antriebsseite
- 2.: Antriebswelle
- 4.: Pfeil
- 5.: Pumpengehäuse
- 6.: Fördereinrichtung
- 8.: Abtriebswelle
- 9.: Abtriebsseite
- 10.: Pfeil
- 11.: Leitung
- 12.: Fluidspeicher
- 14.: Leitung
- 15.: Fluidspeicher
- 20.: Leitung
- 22.: Fluidspeicher
- 24.: Volumenstrombegrenzungseinrichtung
- 30.: Leitung
- 32.: Fluidspeicher
- 34.: Volumenstrombegrenzungseinrichtung
- 42.: Kennlinie bei geöffneter Volumenstrombegrenzungseinrichtung
- 43.: Kennlinie bei geschlossener Volumenstrombegrenzungseinrichtung
- 44.: tatsächlicher Kennlinienverlauf
- 50.: Zahnradpumpe
- 51.: Pumpengehäuse
- 52.: Gehäusegrundkörper
- 54.: Zahnrad
- 55.: Pumpenwelle
- 56.: Zahnrad
- 57.: Welle
- 58.: Zahnrad
- 59.: Welle
- 61.: Gehäuseabschlussplatte
- 62.: Gehäuseabschlussplatte
- 64.: Druckraum
- 65.: Druckraum
- 66.: Fluidspeicher
- 67.: Fluidspeicher
- 68.: Druckraum
- 69.: Druckraum
- 70.: Fluidspeicher
- 71.: Fluidspeicher
- 72.: Fluidspeicher
- 73.: Fluidspeicher
- 74.: Fluidspeicher
- 75.: Fluidspeicher
- 76.: Verbindungskanal
- 77.: Drosselventil
- 78.: Verbindungskanal
- 79.: Drosselventil
- 81.: Verbindungskanal
- 82.: Drosselventil
- 83.: Verbindungskanal
- 84.: Drosselventil
- 91.: Ventileinrichtung
- 92.: Ventileinrichtung
- 93.: Ventileinrichtung
- 94.: Ventileinrichtung
- 95.: Rückschlagventil
- 96.: Rückschlagventil
- 97.: Fluidquelle mit niedrigem Druck (Tank)
- 98.: Fluidquelle mit niedrigem Druck (Tank)

## Patentansprüche

1. Drehschwingungsdämpfungseinrichtung mit einer Fördereinrichtung (6), insbesondere einer Verdrängerpumpe, für ein Fluid, mit einem Fluidspeicher, **dadurch gekennzeichnet, dass** die Fördereinrichtung (6) mit zwei Fluidspeichern (12,15) in Verbindung steht, zwischen welche die Fördereinrichtung (6), insbesondere eine Verdrängerpumpe, in Reihe geschaltet ist.

2. Drehschwingungsdämpfungseinrichtung nach Anspruch 1, **dadurch gekennzeichnet, dass** die beiden Fluidspeicher (12,15) jeweils mit einem weiteren Fluidspeicher (22,32) in Reihe geschaltet sind.

3. Drehschwingungsdämpfungseinrichtung nach Anspruch 2, **dadurch gekennzeichnet, dass** zwischen den Fluidspeichern (12,15) und den weiteren Fluidspeichern (22,32) insbesondere jeweils eine Volumenstrombegrenzungseinrichtung (24,34), insbesondere eine Drosselstelle oder eine Drosselventileinrichtung, vorgesehen ist.

4. Drehschwingungsdämpfungseinrichtung nach Anspruch 2 oder 3, **dadurch gekennzeichnet, dass** zwischen den Fluidspeichem (12,15) und den weiteren fluidspeichern (22,32) ein weiterer Verbraucher angeschlossen ist.

5. Drehschwingungsdämpfungseinrichtung nach Anspruch 3 oder 4, **dadurch gekennzeichnet, dass** die Volumenstrombegrenzungseinrichtungen (24,34) drehzahlabhängig arbeiten.

6. Drehschwingungsdämpfungseinrichtung nach Anspruch 5, **dadurch gekennzeichnet, dass** die Volumenstrombegrenzungseinrichtungen (24,34) so eingestellt sind, dass sie bei einer Frequenz öffnen, die zwischen den Resonanzfrequenzen im geöffneten und im geschlossenen Zustand der zugehörigen Volumenstrombegrenzungseinrichtung liegt.

7. Drehschwingungsdämpfungseinrichtung nach einem der vorhergehenden Ansprüche, **dadurch gekennzeichnet, dass** die Fördereinrichtung (6) ein Gehäuse (5), das mit der Antriebs- oder Abtriebsseite (1,9) eines Antriebsstrangs gekoppelt ist, und ein Eingangsteil aufweist, das mit der Abtriebs- oder Antriebsseite (9,1) des Antriebsstrangs gekoppelt ist.

8. Drehschwingungsdämpfungseinrichtung nach einem der vorhergehenden Ansprüche, **dadurch gekennzeichnet, dass** die Fördereinrichtung (6) eine zweistufige Zahnradpumpe (50) mit mindestens zwei Druckräumen (64,68) umfasst, die jeweils mit mindestens einem Fluidspeicher (66,70) in Verbindung stehen.

9. Drehschwingungsdämpfungseinrichtung nach Anspruch 8, **dadurch gekennzeichnet, dass** die Zahnradpumpe (50) zwei weitere Druckräume (65,69) umfasst, die jeweils mit mindestens einem weiteren Fluidspeicher (67,71) in Verbindung stehen.

10. Drehschwingungsdämpfungseinrichtung nach Anspruch 8 oder 9, **dadurch gekennzeichnet, dass** die Fluidspeicher (66,67,72,73;70,71,74,75) gleichmäßig über einen Umfang der Zahnradpumpe (50) verteilt angeordnet sind.

11. Drehschwingungsdämpfungseinrichtung nach einem der vorhergehenden Ansprüche, **dadurch gekennzeichnet, dass** die Fluidspeicher (12,15) mit fluidquelle mit niedrigem Druck (97,98) durch Rückschlagventile (95,96) verknüpft werden.

12. Drehschwingungsdämpfungseinrichtung nach Anspruch 11, **dadurch gekennzeichnet, dass** die Rückschlagventile (95,96) ansteuerbar sind.

13. Drehschwingungsdämpfungseinrichtung nach Anspruch 12, **dadurch gekennzeichnet, dass** die Rückschlagventile als Anfahrelemente benutzbar sind.

## Claims

1. Torsional vibration damping device with a conveying device (6), in particular a positive displacement pump, for a fluid, with a fluid accumulator, **characterized in that** the conveying device (6) is connected to two fluid accumulators (12, 15), between which the conveying device (6), in particular a positive displacement pump, is connected in series.

2. Torsional vibration damping device according to Claim 1, **characterized in that** the two fluid accumulators (12, 15) are in each case connected in series to a further fluid accumulator (22, 32).

3. Torsional vibration damping device according to Claim 2, **characterized in that**, in particular, in each case a volume flow limitation device (24, 34), particularly a throttle point or a throttle valve device, is provided between the fluid accumulators (12, 15) and the further fluid accumulators (22, 32).

4. Torsional vibration damping device according to Claim 2 or 3, **characterized in that** a further consumer is connected between the fluid accumulators (12, 15) and the further fluid accumulators (22, 32).

5. Torsional vibration damping device according to Claim 3 or 4, **characterized in that** the volume flow limitation devices (24, 34) operate as a function of rotational speed.

6. Torsional vibration damping device according to Claim 5, **characterized in that** the volume flow limitation devices (24, 34) are set such that they open at a frequency which lies between the resonant frequencies in the open state and in the closed state of the associated volume flow limitation device.

7. Torsional vibration damping device according to one of the preceding claims, **characterized in that** the conveying device (6) has a housing (5), which is coupled to the drive side or driven side (1, 9) of a drive train, and an input part, which is coupled to the driven side or drive side (9, 1) of the drive train.

8. Torsional vibration damping device according to one of the preceding claims, **characterized in that** the conveying device (6) comprises a two-stage gear pump (50) with at least two pressure spaces (64, 68) which are connected in each case to at least one fluid accumulator (66, 70).

9. Torsional vibration damping device according to Claim 8, **characterized in that** the gear pump (50) comprises two further pressure spaces (65, 69) which are connected in each case to at least one further fluid accumulator (67, 71).

10. Torsional vibration damping device according to Claim 8 or 9, **characterized in that** the fluid accumulators (66, 67, 72, 73; 70, 71, 74, 75) are arranged so as to be distributed uniformly over a circumference of the gear pump (50).

11. Torsional vibration damping device according to one of the preceding claims, **characterized in that** the fluid accumulators (12, 15) are linked to fluid sources with low pressure (97, 98) by means of non-return valves (95, 96).

12. Torsional vibration damping device according to Claim 11, **characterized in that** the non-return valves (95, 96) are activatable.

13. Torsional vibration damping device according to Claim 12, **characterized in that** the non-return valves can be used as starting elements.

## Revendications

1. Dispositif d'amortissement d'oscillations de rotation doté d'un dispositif de transport (6), notamment d'une pompe de refoulement, pour un fluide, avec un accumulateur de fluide, **caractérisé en ce que** le dispositif de transport (6) est relié à deux accumulateurs de fluide (12, 15) entre lesquels le dispositif de transport (6), notamment une pompe de refoulement, est branchée en série.

2. Dispositif d'amortissement d'oscillations de rotation selon la revendication 1, **caractérisé en ce que** les deux accumulateurs de fluide (12, 15) sont respectivement branchés en série avec un accumulateur de fluide (22, 32) supplémentaire.

3. Dispositif d'amortissement d'oscillations de rotation selon la revendication 2, **caractérisé en ce qu'**on prévoit notamment, entre les accumulateurs de fluide (12, 15) et les accumulateurs de fluide (22, 32) supplémentaires, respectivement un dispositif de limitation du débit d'écoulement (24, 34), notamment un point d'étranglement ou un dispositif de vanne papillon.

4. Dispositif d'amortissement d'oscillations de rotation selon la revendication 2 ou 3, **caractérisé en ce qu'**on rattache, entre les accumulateurs de fluide (12, 15) et les accumulateurs de fluide (22, 32) supplémentaires, un dissipateur supplémentaire.

5. Dispositif d'amortissement d'oscillations de rotation selon la revendication 3 ou 4, **caractérisé en ce que** les dispositifs de limitation du débit d'écoulement (24, 34) fonctionnent en fonction du nombre de tours.

6. Dispositif d'amortissement d'oscillations de rotation selon la revendication 5, **caractérisé en ce que** les dispositifs de limitation du débit d'écoulement (24, 34) sont réglés de telle sorte qu'ils s'ouvrent à une fréquence située entre les fréquences de résonance, à l'état ouvert et à l'état fermé, du dispositif de limitation du débit d'écoulement correspondant.

7. Dispositif d'amortissement d'oscillations de rotation selon l'une quelconque des revendications précédentes, **caractérisé en ce que** le dispositif de transport (6) comprend un boîtier (5) couplé au côté d'entraînement en entrée ou d'entraînement en sortie (1,9) d'une chaîne cinématique ainsi qu'une partie d'accès couplée au côté d'entraînement en sortie ou d'entraînement en entrée (9, 1) de la chaîne cinématique.

8. Dispositif d'amortissement d'oscillations de rotation selon l'une quelconque des revendications précédentes, **caractérisé en ce que** le dispositif de transport (6) comprend une pompe à roues dentées (50) à deux étages équipée d'au moins deux chambres de pression (64, 68) respectivement reliées à au moins un accumulateur de fluide (66, 70).

9. Dispositif d'amortissement d'oscillations de rotation selon la revendication 8, **caractérisé en ce que** la pompe à roues dentées (50) comprend deux chambres de pression (65, 69) supplémentaires respectivement reliées à au moins un accumulateur de fluide (67, 71) supplémentaire.

10. Dispositif d'amortissement d'oscillations de rotation selon la revendication 8 ou 9, **caractérisé en ce que** les accumulateurs de fluide (66, 67, 72, 73 ; 70, 71, 74, 75) sont disposés de façon à être régulièrement répartis sur toute la périphérie de la pompe à roues dentées (50).

11. Dispositif d'amortissement d'oscillations de rotation selon l'une quelconque des revendications précédentes, **caractérisé en ce que** les accumulateurs de fluide (12, 15) sont raccordés à des sources de fluide à faible pression (97, 98) par le biais de soupapes de retenue (95, 96).

12. Dispositif d'amortissement d'oscillations de rotation selon la revendication 11, **caractérisé en ce que** les soupapes de retenue (95, 96) peuvent être pilotées.

13. Dispositif d'amortissement d'oscillations de rotation selon la revendication 12, **caractérisé en ce que** les soupapes de retenue peuvent servir d'éléments de démarrage.
